# FASCICULE DE BREVET EUROPEEN

(11) **EP 0 691 481 B1**
(45) Date de publication et mention de la délivrance du brevet: **04.11.1998**
(21) Numéro de dépôt: 95401615.0
(22) Date de dépôt: 05.07.1995
(51) Int. Cl.: F16C 7/04, F16F 7/10

(54) **Perfectionnements aux bielles qui relient certains organes vibrants des véhicules aux caisses de ces véhicules**
Verbesserungen an Pleuelstangen, die bestimmte schwingungserzeugende Teile von Fahrzeugen an deren Wagenkasten befestigen
Improvements to connecting rods connecting certain vibrating elements of vehicles to the body of these vehicles

(30) Priorité: 08.07.1994 FR 9408489
(43) Date de publication de la demande: 10.01.1996
(73) Titulaire: HUTCHINSON, F-75008 Paris (FR)
(72) Inventeur: Gennesseaux, André, F-28200 Chateaudun (FR)
(74) Mandataire: Burbaud, Eric

(56) Documents cités:
- EP-A- 0 584 008
- WO-A-91/14882
- DE-A- 3 529 199
- GB-A- 2 071 266

## Description

L'invention est relative aux bielles reliant aux caisses des véhicules certains organes, de ces véhicules, qui sont des sources de vibrations et qui sont par ailleurs reliés auxdites caisses par des supports élastiques.

De tels organes sont en particulier les moteurs à combustion interne des véhicules considérés ou leurs trains de roulement.

Des bielles du genre en question sont divulguées notamment dans le document GB-A-2 071 266, qui décrit une bielle pour relier à la caisse d'un véhicule un organe vibrant qui est monté sur ce véhicule par l'intermédiaire de supports élastiques, cette bielle comprenant :
- un bras allongé rigide qui relie entre eux un premier manchon destiné à être relié à la caisse et un deuxième manchon destiné à être relié à l'organe vibrant, ces deux manchons entourant respectivement, avec interposition de deux bagues en caoutchouc ou analogue, deux tourillons solidarisables respectivement avec la caisse et avec l'organe vibrant, le bras et les bagues étant dépourvus de toutes poches et conduites à liquide,
- et un contrepoids porté en porte-à-faux par la bielle, au-delà de l'axe du premier manchon selon la direction longitudinale de la bielle.

Les bielles connues de ce type sont montées de façon à travailler essentiellement à la traction et à la compression selon la direction de leur plus grande dimension ou direction longitudinale, laquelle est orientée selon une direction horizontale ou présentant au moins une composante horizontale, le but desdites bielles étant d'assurer un bon positionnement relatif des deux tourillons qu'elles relient selon ladite direction, les positionnements relatifs de ces tourillons selon les deux autres directions perpendiculaires de l'espace, et en particulier selon la direction verticale, étant assurés à l'aide des supports élastiques.

Comme on le sait, il existe pour ces supports élastiques de nombreux modes de réalisation, en particulier de type hydraulique, permettant d'amortir ou filtrer les transmissions des vibrations de la source à la caisse à travers ces supports.

Au niveau des bielles de liaison ici considérées, il est généralement estimé que la transmission des vibrations est suffisamment amortie par interposition de bagues en caoutchouc ou matériau analogue entre les manchons des bielles et les tourillons entourés par ces manchons.

L'expérience montre qu'effectivement l'amortissement obtenu à l'aide de telles bagues est dans la pratique suffisant pour les vibrations qui sont orientées selon la direction longitudinale de la bielle.

Mais la demanderesse a observé que, très curieusement, il n'en était pas de même pour les vibrations de fréquence suffisamment élevée orientées transversalement, c'est-à-dire perpendiculairement à la direction longitudinale de la bielle et de préférence en outre perpendiculairement aux axes des tourillons.

En effet, la bielle vibre alors, en tournant autour de son centre instantané de rotation (CIR) et comme ce centre est, dans les modes de réalisation actuels, situé entre les deux axes A et B des deux manchons associés respectivement à la caisse et à l'organe vibrant, la vibration transversale créée au niveau du second B de ces deux axes se traduit par une vibration transversale au niveau du premier axe A.

En d'autres termes, la bielle constitue alors un chemin inattendu pour appliquer sur la caisse du véhicule certaines vibrations indésirables.

Le but de l'invention est de supprimer ces dernières vibrations.

A cet effet, les bielles selon l'invention sont essentiellement caractérisées en ce que le centre instantané de rotation de la bielle est placé au niveau de l'axe du premier manchon.

Dans des modes de réalisation préférés de cette invention, on a recours en outre à l'une et/ou à l'autre des dispositions suivantes :
- pour une bielle de masse totale P, ledit contrepoids présente une masse supérieure à P/5,
- la masse du contrepoids est matériellement fondue dans la masse de la bielle.

Par ailleurs, l'invention a également pour objet un véhicule comportant un organe vibrant monté sur la caisse dudit véhicule par l'intermédiaire de supports élastiques et d'au moins une bielle telle que définie ci-dessus, le premier manchon de la bielle étant relié à la caisse et le deuxième manchon de la bielle étant relié à l'organe vibrant.

Avantageusement, l'organe vibrant est le moteur du véhicule.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, est un schéma montrant une application type des bielles selon l'invention.

La figure 2 montre de côté une bielle de l'art antérieur avec, au-dessous de celle-ci un graphique montrant les positions respectives, dans cette bielle, du centre de masse et du centre instantané de rotation.

La figure 3 montre semblablement à la figure 2 une bielle établie selon l'invention avec un graphique comparable au précédent.

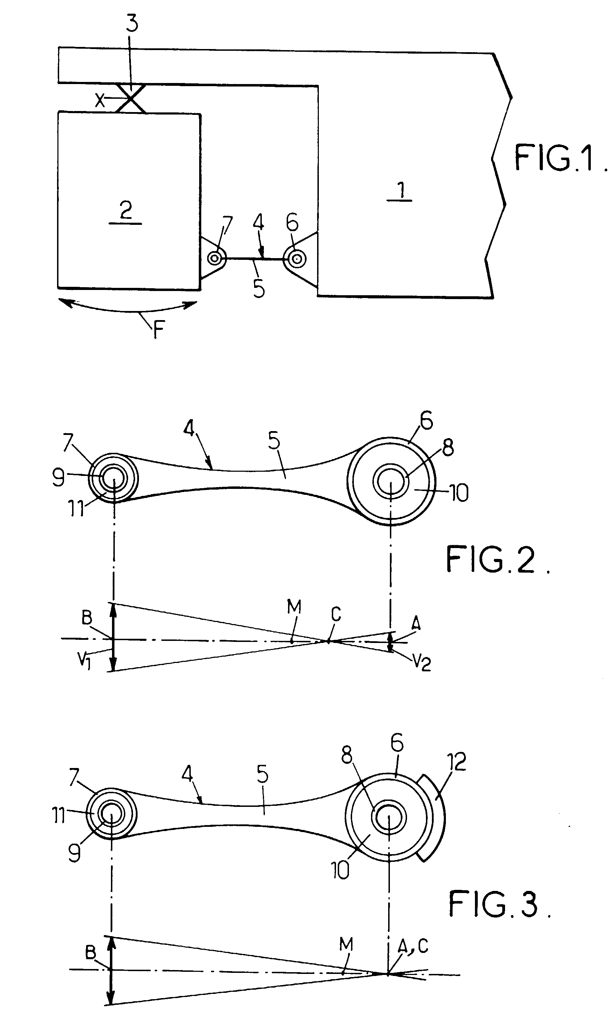

Dans l'application type schématisée sur la figure 1, on voit une caisse de véhicule 1 et le moteur à combustion interne 2 de ce véhicule, monté sur ladite caisse à l'aide de supports élastiques 3 de tout type désirable.

Ces supports, qui sont par exemple au nombre de deux, écartés transversalement l'un de l'autre, sont étudiés de façon à amortir au maximum la transmission, par leur intermédiaire, des vibrations créées dans le moteur 2 à la caisse 1.

Lesdits supports peuvent être considérés comme définissant essentiellement un axe de pivotement X, généralement horizontal, autour duquel le moteur pourrait encore pivoter selon la flèche F.

Pour empêcher ces pivotements, une solution simple connue consiste à interposer entre le moteur 2 et la caisse 1 une bielle 4 comprenant essentiellement un bras rigide 5 qui relie entre eux deux manchons 6, 7 traversés respectivement par deux tourillons 8, 9 solidarisés respectivement avec la caisse et avec le moteur.

Pour assurer un certain filtrage des vibrations du moteur dans toutes les directions, on interpose entre chaque manchon et le tourillon correspondant une bague 10, 11 de caoutchouc ou matière analogue.

Celle 10, de ces bagues, qui est disposée du côté de la caisse, est en général plus épaisse que l'autre et est ajourée par des fentes en arc de cercle centrées sur l'axe correspondant (non représentées) pour améliorer la souplesse de la liaison.

Pour chaque bielle 4, il existe un point C, dit centre instantané de rotation ou "CIR", autour duquel cette bielle pivote transversalement, c'est-à-dire dans un plan perpendiculaire aux axes de rotation de ses deux manchons, lorsqu'elle est soumise à des vibrations.

Dans les modes de réalisation connus schématisés sur la figure 2, ledit point C, voisin du centre de gravité ou centre de masse M, est disposé entre les axes de rotation A et B des deux manchons 6 et 7.

Il en résulte que, si l'axe B côté moteur est soumis à des vibrations transversales d'amplitude V₁, l'axe A côté caisse est soumis lui aussi à des vibrations transversales dont l'amplitude V₂ est liée à l'amplitude V₁ dans un rapport égal au rapport CA/CB.

En d'autres termes, la bielle 4 constitue un chemin inattendu pour la transmission de certaines vibrations du moteur 2 à la caisse 1.

Cette transmission peut se révéler très importante lorsque tous les autres "chemins" susceptibles d'être empruntés par les vibrations du moteur pour parvenir à la caisse ont été soigneusement neutralisés.

Le but principal de l'invention est de neutraliser ce chemin à son tour.

A cet effet, on ajoute à la bielle un contrepoids ou masse d'équilibrage schématisé par la référence 12 sur la figure 3 de façon à déplacer le centre instantané de rotation C de cette bielle jusqu'à le faire coïncider avec l'axe A du manchon 6 côté caisse.

De cette façon, lorsque la bielle 4 est soumise à des vibrations engendrées par le moteur sur son extrémité correspondant au manchon 7, ladite bielle est soumise à des rotations autour de l'axe A de son manchon 6 : cet axe A n'est lui-même plus soumis à aucune vibration transversale.

L'expérience montre que l'équilibrage obtenu permet effectivement de réduire dans des proportions très importantes, par exemple de l'ordre de 5 à 10 fois, l'amplitude des vibrations transversales en question.

La masse additionnelle correspondant au contrepoids 12 peut être relativement faible, et par exemple de l'ordre de 10 % du poids total de la bielle classique comparable sans contrepoids. Mais elle peut également être relativement importante, étant en général supérieure à 20 % dudit poids total et pouvant atteindre ou même dépasser 50 % de ce poids total.

C'est ainsi que, pour une bielle 4 pesant entre 200 et 300 g, la masse du contrepoids 12 peut facilement atteindre ou dépasser 100 g.

La masse constitutive du contrepoids 12 peut être rapportée sur une bielle classique, plus précisément sur la face extérieure, du manchon 6 constitutif de cette bielle, la plus éloignée du manchon 7, ainsi qu'il a été schématisé sur la figure 3.

Mais on peut également noyer ladite masse dans celle de la bielle et en particulier épaissir en correspondance la portion, de son manchon 6, la plus éloignée du manchon 7.

En suite de quoi, et quel que soit le mode de réalisation adopté, on dispose d'une bielle de liaison propre à être interposée entre une caisse de véhicule et un organe vibrant monté sur ce véhicule, par l'intermédiaire de supports élastiques, bielle dont le montage et la constitution résultent suffisamment de ce qui précède.

Cette bielle présente par rapport aux bielles du même genre antérieurement connues un certain nombre d'avantages et en particulier celui d'amortir naturellement la transmission des vibrations de l'organe vibrant à la caisse, et en particulier de celles, de ces vibrations, qui sont orientées transversalement, c'est-à-dire perpendiculairement à la direction longitudinale de la bielle.

## Revendications

1. Bielle pour relier à la caisse (1) d'un véhicule un organe vibrant (2) qui est monté sur ce véhicule par l'intermédiaire de supports élastiques (3), cette bielle comprenant :
- un bras allongé rigide (5) qui relie entre eux un premier manchon (6) destiné à être relié à la caisse (1) et un deuxième manchon (7) destiné à être relié à l'organe vibrant (2), ces deux manchons (6,7) entourant respectivement, avec interposition de deux bagues en caoutchouc ou analogue (10,11), deux tourillons (8,9) solidarisables respectivement avec la caisse et avec l'organe vibrant, le bras et les bagues étant dépourvus de toutes poches et conduites à liquide,
- et un contrepoids (12) porté en porte-à-faux par la bielle, au-delà de l'axe (A) du premier manchon (6) selon la direction longitudinale de la bielle, caractérisée en ce que le centre instantané de rotation (C) de la bielle est placé au niveau de l'axe (A) du premier manchon (6).

2. Bielle selon la revendication 1, de masse totale P, dans laquelle ledit contrepoids (12) présente une masse supérieure à P/5.

3. Bielle selon l'une quelconque des précédentes revendications, caractérisée en ce que la masse du contrepoids (12) est matériellement fondue dans la masse de la bielle.

4. Véhicule automobile comportant un organe vibrant (2) monté sur la caisse dudit véhicule par l'intermédiaire de supports élastiques (3) et d'au moins une bielle selon l'une quelconque des revendications précédentes, le premier manchon (6) de la bielle étant relié à la caisse (1) et le deuxième manchon (7) de la bielle étant relié à l'organe vibrant (2).

5. Véhicule automobile selon la revendication 4, dans lequel l'organe vibrant (2) est le moteur du véhicule.

## Patentansprüche

1. Koppelglied zum Verbinden eines an einem Fahrzeug mittels elastischer Lager (3) angeordneten, schwingenden Organs (2) mit der Karosserie dieses Fahrzeugs, wobei das Koppelglied umfaßt:
- einen gestreckten starren Arm (5), der eine erste Muffe (6), die dafür bestimmt ist, mit der Karosserie (1) verbunden zu sein, und eine zweite Muffe (7), die dafür bestimmt ist, mit dem schwingenden Organ (2) verbunden zu sein, miteinander verbindet, wobei die zwei Muffen (6, 7) jeweils unter Zwischenlage von zwei Ringen aus Gummi oder ähnlichem (10, 11) zwei Lagerzapfen (8, 9) umgeben, die jeweils mit der Karosserie und mit dem schwingenden Organ fest verbindbar sind, wobei der Arm und die Ringe frei von jeglichen Taschen und Flüssigkeitsleitungen sind,
- und ein Gegengewicht (12), das von der Koppel in Längsrichtung der Koppel jenseits der Achse (A) der ersten Muffe (6) auskragend gelagert ist,
**dadurch gekennzeichnet, daß** das Momentan-Drehzentrum (C) des Koppelgliedes auf Höhe der Achse (A) der ersten Muffe (6) liegt.

2. Koppelglied nach Anspruch 1 mit einer Gesamtmasse P, bei welcher das Gegengewicht (12) eine Masse größer als P/5 aufweist.

3. Koppelglied nach einem der vorangegangenen Ansprüche, **dadurch gekennzeichnet, daß** die Masse des Gegengewichts (12) stofflich mit der Masse des Koppelgliedes verschmolzen ist.

4. Kraftfahrzeug umfassend ein schwingendes Organ (2), das an der Karosserie des Fahrzeugs mittels elastischer Lager (3) und wenigstens einem Koppelglied nach einem der vorangegangenen Ansprüche angeordnet ist, wobei die erste Muffe (6) des Koppelgliedes mit der Karosserie (1) und die zweite Muffe (7) des Koppelgliedes mit dem schwingenden Organ (2) verbunden ist.

5. Kraftfahrzeug nach Anspruch 4, bei dem das schwingende Organ (2) der Fahrzeugmotor ist.

## Claims

1. A connecting rod for connecting to the body (1) of a vehicle a vibrating member (2) which is mounted on this vehicle via elastic supports (3), the said connecting rod comprising:
- a rigid elongated arm (5) which connects to one another a first sleeve (6) adapted to be connected to the body (1) and a second sleeve (7) adapted to be connected to the vibrating member (2), these two sleeves (6, 7) respectively and through two interposed rings of rubber or the like (10, 11), engaging around two bearing journals (8, 9) adapted to be fixed respectively to the body and to the vibrating member, the arm and the rings being devoid of any liquid passages or pockets,
- and a counterweight (12) carried, in projecting fashion by the connecting rod, beyond the axis (A) ofthe first sleeve (6) in accordance with the longitudinal direction of the connecting rod,
characterised in that the instantaneous centre of rotation (C) of the connecting rod is positioned at the level of the axis (A) of the first sleeve (6).

2. A connecting rod according to claim 1, of total mass P, in which the said counterweight (12) has a mass in excess of P/5.

3. A connecting rod according to any one of the preceding claims, characterised in that the mass ofthe counterweight (12) is integral with the mass ofthe connecting rod.

4. A motor vehicle comprising a vibrating member (2) mounted on the body of the said vehicle via elastic supports (3) and at least one connecting rod according to any one of the preceding claims, the first sleeve (6) of the connecting rod being connected to the body (1) and the second sleeve (7) of the connecting rod being connected to the vibrating member (2).

5. A motor vehicle according to claim 4, in which the vibrating member (2) is the engine of the vehicle.
